# EUROPEAN PATENT SPECIFICATION

(11) **EP 1 445 666 B1**
(45) Date of publication and mention of the grant of the patent: **06.06.2018**
(21) Application number: 04250597.4
(22) Date of filing: 04.02.2004
(51) Int. Cl.: G03G 15/20, H04N 1/23

(54) **Multi-function processing apparatus**
Gerät für Mehrzweckverarbeitung
Appareil pour traitement multifonctionnel

(30) Priority: 05.02.2003 JP 2003027944
(43) Date of publication of application: 11.08.2004
(73) Proprietor: Brother Kogyo Kabushiki Kaisha, Nagoya-shi, Aichi 467-8561 (JP)
(72) Inventor: Hori, Yuji, c/o Technology Planning & IP Dpt, Nagoya-shi, Aichi-ken 467-8561 (JP); Ohno, Hiroshi c/o Technology Planning & IP Dpt, Nagoya-shi, Aichi-ken 467-8561 (JP)
(74) Representative: J A Kemp

(56) References cited:
- EP-A- 0 883 040
- EP-A2- 1 199 612
- US-A- 4 745 436
- US-B1- 6 335 797

## Description

### BACKGROUND OF THE INVENTION

### Field of the Invention

The present invention relates to a multi-function processing apparatus which has a heater for thermally fusing toner transferred to record paper and can provide favorable timing of raising the temperature of the heater.

### Background Art

In some facsimile machines in related arts, to print a received image in a copy mode or a FAX mode, the temperature of a heater is controlled so that a fixing roller reaches a temperature for enabling the fixing roller to fix an image and the heater of the fixing roller is turned off in any other modes. (For example, refer to JP-A-2002-84384 (page 7, FIG. 24))

EP 0 883 040A describes an image forming apparatus which can shorten a first printing time in accordance with a recording mode without increasing electric power consumption is provided. When a reception signal is absent, if a copy key has been depressed, the image forming apparatus is switched to a copy mode, and temperature control is started by supplying a heater of a thermal fixing device with electric power. When the user operates a start key to start copying after setting an original and copying conditions, it is determined if the heater has reached a fixable temperature. If the result of the determination is affirmative, a copying operation is completed by performing image formation and fixing on a recording sheet. When a reception signal is present, image data is received, and after storing the image data in an image memory, temperature rise control of the heater is started.

US 6,335,797 describes a prediction section which sends a prediction signal to a heater control section when receiving a document setting signal from a sensor for detecting a presence of a document or a book door open signal from a book door open/close sensor. The heater control section turns on power of the heater of a print section. Thereafter, a print control section executes a print operation when a print designation is operated, and turns off power of the heater when no print designation is operated within a fixed period of time or a transmission designation is operated. Therefore, power of the heater is turned on prior to instruction of a print start, and this allows the reduction of time from the operators instruction of the print start to the actual print start.

### SUMMARY OF THE INVENTION

In a multi-function processing apparatus having a facsimile function and a copy function, the temperature of a heater for thermally fusing toner transferred to record paper of the heater should be promptly raised to a temperature at which the copy function can be executed, in order to shorten the fast copy wait time.

On the other hand, it is unfavorable to maintain the temperature of the heater such that fusing the toner can be performed all the time, from the viewpoint of energy saving.

A multi-function processing apparatus is disclosed herein which can set the start timing of raising the temperature of a fixing unit favorably from the viewpoint of shortening the fast copy wait time.

According to one aspect of the invention, there is provided a multi-function processing apparatus as defined in appended claim 1.

According to the aspect, raising the temperature of the heater is already started before the user turns on a copy start button for starting execution of the copy function, so that execution of the copy function can be started promptly and the fast copy wait time can be shortened.

In this case, however, to execute the facsimile function rather than the copy function, the heater is not used and thus the energy used to raise the temperature of the heater is wasted.

According to this aspect, the multi-function processing apparatus provides the first control processing for starting to raise the temperature of the fixing unit based on detection of the original by the original detection unit and the second control processing for starting to raise the temperature of the fixing unit based on the copy operation instruction given by the copy instruction unit. Further, as the start timing of raising the temperature of the fixing unit, the first control processing or the second control processing can be set by the control processing setting unit.

Since the first control processing starts to raise the temperature of the fixing unit based on detection of the original by the original detection unit, the fast copy wait time is shortened as compared with the second control processing, but the first control processing is not fitted for energy saving. On the other hand, the second control processing starts to raise the temperature of the fixing unit based on the copy operation instruction given by the copy instruction unit and thus is fitted for energy saving as compared with the first control processing, but the fast copy wait time is prolonged.

That is, in the multi-function processing apparatus, raising the temperature of the fixing unit can be started in either the first control processing for starting to raise the temperature of the fixing unit based on detection of the original by the original detection unit or the second control processing for starting to raise the temperature of the fixing unit based on the copy operation instruction given by the copy instruction unit as the start timing of raising the temperature of the fixing unit determined from the viewpoint of shortening the fast copy wait time or energy saving. Further, the start timing of raising the temperature of the fixing unit can be set in either the first control processing or the second control processing by the control processing setting unit. Thus, user's intention or the machine use environment of the user can be reflected to change the start timing of raising the temperature of the fixing unit.

The multi-function processing apparatus according to another aspect of the invention further includes a connection state detection unit that detects whether or not the transmission unit is connected to an external unit. When the connection state detection unit detects the transmission unit being unconnected to an external unit, the control processing setting unit sets the control processing of the fixing control unit to the first control processing.

Thus, if the multiple function processing apparatus of the invention also includes the connection state detection unit for detecting whether or not the transmission unit for transmitting the data read through the read unit to an external system is connected to an external unit, when the connection state detection unit detects the transmission unit being unconnected to an external unit, the transmission unit cannot be executed and the copy operation can be executed. Thus, if the control processing of the fixing control unit is set to the first control processing by the control processing setting unit, the fast copy wait time can always be shortened for the executable copy operation, so that the machine use environment of the user can be reflected to change the start timing of raising the temperature of the fixing means determined from the viewpoint of shortening the fast copy wait time or energy saving.

For example, in the multiple function processing machine of the invention, the transmission unit may include a facsimile unit that transmits the image data read through the read unit as facsimile data; and the connection state detection unit detects whether the facsimile unit is connected to a public line network.

According to another aspect of the invention, the control processing setting unit has a manual setting mode of manual operation and an automatic setting mode and sets the control processing of the fixing control unit according to the setup setting mode.

When the control processing setting unit is set to the automatic setting mode, the control processing setting unit sets the control processing of the fixing control unit based on the history of past processing stored in the processing storage unit.

According to another aspect of the invention, the multi-function processing apparatus further includes: a manual processing switching unit. When the control processing setting unit is set to the manual setting mode, the control processing setting unit sets the control processing of the fixing control unit based on operation of the manual processing switching unit.

Thus, in the multiple function processing apparatus of the invention, the control processing setting unit has the manual setting mode of manual operation and the automatic setting mode and to set the control processing of the fixing control unit according to the automatic setting mode, the control processing of the fixing control unit is set based on the history of the control processing executed by the fixing control unit, the execution result of the copy operation and the transmission unit, or the like. Thus, the machine use environment of the user can be reflected reliably to change the start timing of raising the temperature of the fixing unit determined from the viewpoint of shortening the fast copy wait time or energy saving.

On the other hand, to set the control processing of the fixing control unit according to the manual setting mode, the user can set the control processing of the fixing control unit by manual operation, so that user's intention can be reflected reliably to change the start timing of raising the temperature of the fixing means determined from the viewpoint of shortening the fast copy wait time or energy saving.

According to another aspect of the invention, the multi-function processing apparatus further includes: a manual processing switching unit. When the control processing setting unit is set to the manual setting mode, the control processing setting unit sets the control processing of the fixing control unit based on operation of the manual processing switching unit.

According to another aspect of the invention, the multi-function processing apparatus further includes: a control processing instruction unit that is manually operational. The control processing instruction unit causes the control process ing setting unit to set the control processing of the fixing control unit to the first control processing regardless of the setup state of the control processing of the fixing control unit.

The multiple function processing apparatus of the invention having such features further includes control processing instruction unit that can be manually operated for causing the control processing setting unit to set the control processing of the fixing control unit to the first control processing regardless of the setup state of the control processing of the fixing control unit in the automatic setting mode and the manual setting mode, whereby temporary change in user's intention or temporary change in the machine use environment of the user can also be reflected to change the start timing of raising the temperature of the fixing unit determined from the viewpoint of shortening the fast copy wait time or energy saving.

### BRIEF DESCRIPTION OF THE DRAWINGS

The present invention may be more readily described with reference to the accompanying drawings, in which:
FIG. 1 is a flowchart of a printer in an embodiment of the invention;
FIG. 2 is a flowchart of the printer in the embodiment of the invention;
FIG. 3 is a block diagram of the printer in the embodiment of the invention;
FIG. 4 is a schematic representation to represent the use mode of a facsimile machine according to the embodiment.
FIG. 5 is a schematic perspective view to represent the appearance of the facsimile machine;
FIG. 6 is a schematic representation to represent the internal structure of the facsimile machine;
FIG. 7 is a block diagram to represent the electric configuration of the facsimile machine;
FIGS. 8A to 8C are schematic representations to represent the data structures in RAM, ROM, and a destination information storage section according to the embodiment;
FIGS. 9A to 9C are schematic representations to represent the data structures in RAM, ROM, and a URL information storage section of a web print section according to the embodiment;
FIG. 10 is a flowchart to represent URL and memo information registration processing executed by a CPU of a web print section according to the embodiment; and
FIG. 11 is a schematic representation concerning flag information stored in ROM of the web print section.

### DETAILED DESCRIPTION OF THE PREFERRED EMBODIMENTS

Referring nowto the accompanying drawings, there is shown an embodiment of the invention.

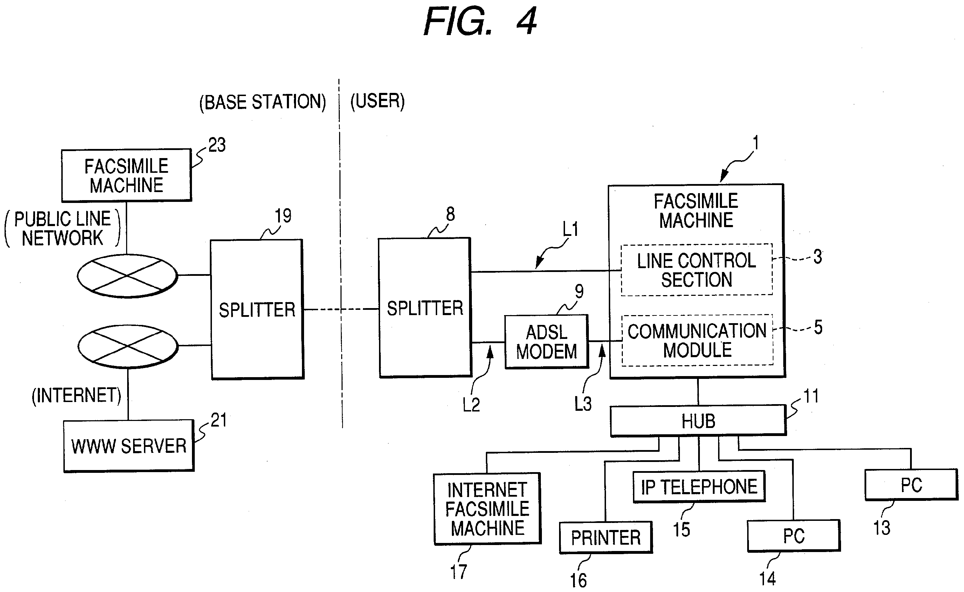

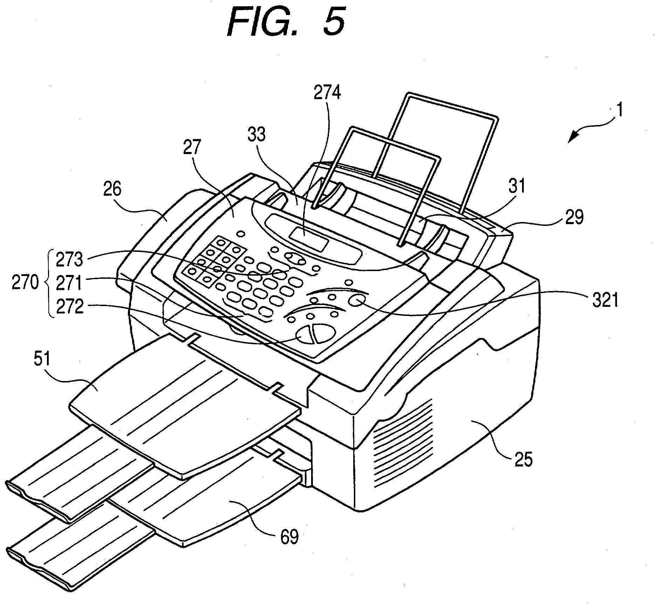

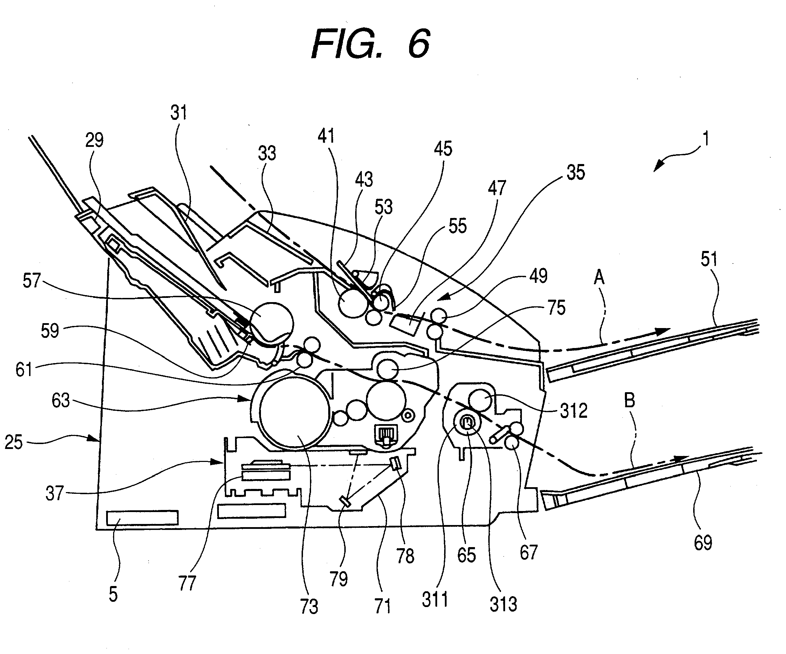

FIG. 4 is a schematic representation to represent the use mode of a facsimile machine 1 incorporating the invention. FIG. 5 is a schematic perspective view to represent the appearance of the facsimile machine 1. FIG. 6 is a schematic representation to represent the internal structure of the facsimile machine 1.

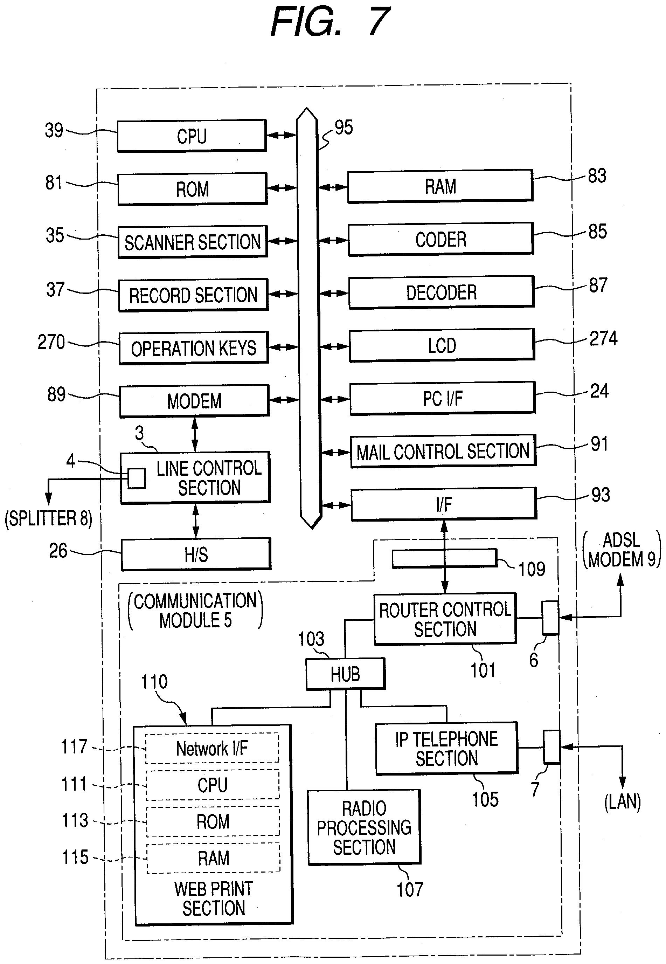

As shown in FIG. 4, the facsimile machine 1 includes a line control section 3 and a communication module 5. The line control section 3 includes an external connection port 4 (see FIG. 7). An analog line L1 (a two-core, four-core telephone line) to a telephone connection port of a splitter 8 installed in a building (home, office, etc.,) is connected to the external connection port 4.

On the other hand, the communication module 5 includes a WAN connection port 6 and a LAN connection port 7, as shown in FIG. 7. The WAN connection port 6 is connected to an ADSL modem 9 via a LAN cable L3 and the LAN connection port 7 is connected to a hub 11. The ADSL modem 9 is connected to an ADSL modem connection port of the splitter 8 via a LAN cable L2.

Connected to the hub 11 are LAN terminals 13 to 17 such as PCs 13 and 14 that can conduct two-way communications, a printer 16 (an ink jet printer, a laser printer, etc., that can be connected to a network), an IP telephone 15 that can transmit and receive a voice signal according to IP (Internet protocol), and an Internet facsimile machine 17 that can be connected to the Internet. That is, the hub 11 is connected to the local area network (LAN) in the building made up of the LAN terminals 13 to 17.

On the other hand, the splitter 8, which is a well known splitter used to use an ADSL (asymmetrical digital subscriber line), demultiplexes a transmission signal with a first signal of almost 4 kHz or less and a higher-frequency second signal for the ADSL transmitted from a splitter 19 installed at a base station into the first signal and the second signal, outputs the first signal to the telephone connection port and the second signal to the ADSL modem connection port, and on the other hand, multiplexes signals input from the connection ports and transmits the provided signal to the splitter 19 at the base station.

That is, the facsimile machine 1 in the embodiment can be connected to a subscriber telephone in a public line network (namely, public switched telephone network (PSTN)) using the line control section 3 and further can be connected to the Internet as a wide area network (WAN) through the communication module 5 and the ADSL modem 9.

Further, the facsimile machine 1 functions as a router for routing data (IP packet) transferred between a communication unit, such as a WWW server 21, in the Internet and each of the LAN terminals 13 to 17 in the LAN as a router control section 101 (described later) in the communication module 5 operates.

The facsimile machine 1 in the embodiment has a printer function and a copy function as well as a usual function (facsimile function) for optically reading an image from an original and transmitting image data representing the image as facsimile data to an external facsimile machine 23 connected to the public switched telephone network via the analog line L1 and receiving facsimile data transmitted via the public switched telephone network and the analog line L1 from the external facsimile machine 23 and forming an image based on the facsimile data on record paper.

The printer function means a function of forming an image based on code data transmitted from the PC 13, PC 14, a word processor, etc., on record paper. Upon reception of code data from an external PC through a PC interface (PC I/F) 24 or code data from the PC 13, PC 14, etc., in the LAN through the communication module 5, the facsimile machine 1 forms an image based on the code data on record paper. The copy function means a function of reading an image from an original using a scanner section 35 (described later) and forming an image on record paper using a record section 37 (described later) based on data of the image.

The facsimile machine 1 having the functions has a handset (H/S) 26 attached to a side of a main unit case 25 and an operation panel 27 placed on the front of the top, as shown in FIG. 5. The operation panel 27 is provided with numeric keys 271 for entering the telephone number (FAX number) of a called party, various operation keys 270 such as a start key 272 and a selection key 273, and a liquid crystal display (LCD) 274 for displaying information concerning the functions.

In addition, a first paper feed tray 29 for storing record paper supplied into the facsimile machine is provided on the upper rear of the main unit, and a second paper feed tray 31 for placing record paper thereon and supplying record paper manually by the user is provided on the first paper feed tray 29. Further, an original feed tray 33 for placing an original to be read thereon is provided on the second paper feed tray 31.

The main unit contains the scanner section 35 for reading an image from an original, the record section 37 for forming a multi-color image on record paper, a board (not shown) for mounting a CPU 39 (see FIG. 7) for controlling drive of the sections, and the like.

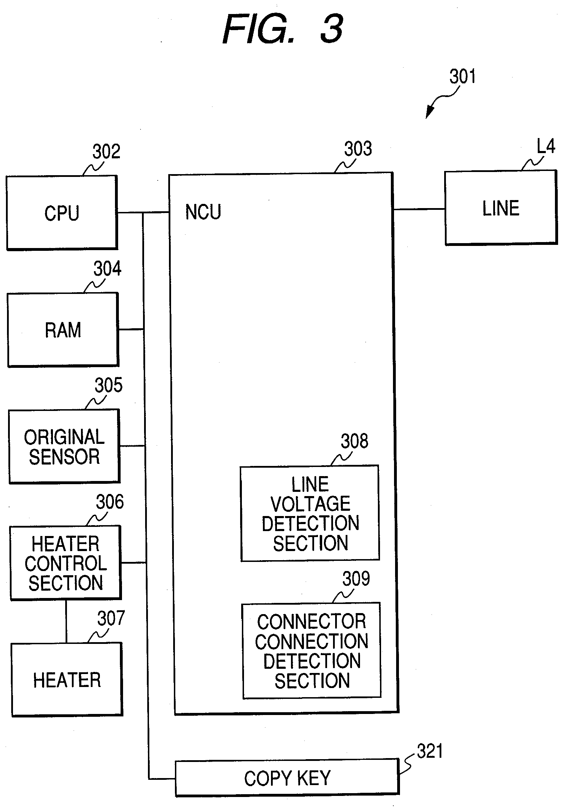

In the scanner section 35, an original placed on the original feed tray 33 is detected by an original sensor (see FIG. 3) and is taken in the scanner section one sheet at a time by a paper feed function made up of a paper feed roller 41, a separation pad 43, etc., as indicated by arrow A in FIG. 6 and then is transported to a reader 47 by a transport roller 45. The reader 47 reads the image formed on the original. The original after the image is read by the reader 47 is ejected through a paper ejection roller 49 to a first paper ejection tray 51 provided on the front.

The scanner section 35 is provided with a touch original front sensor 53 for detecting the leading end of the original and a touch original rear sensor 55 for detecting the trailing end of the original in addition to the original sensor. The CPU 39 controls the sections in the scanner section 35 based on the detection results of the sensors for adjusting paper feed and accomplishing the operation of the scanner section 35.

On the other hand, in the record section 37, record paper placed on the first paper feed tray 29 or the second paper feed tray 31 is taken in the record section one sheet at a time by a paper feed mechanism made up of a paper feed roller 57, a separation pad 59, etc., as indicated by arrow B in FIG. 6. The record paper is sent through a transport roller 61 to an image formation apparatus 63. The image formation apparatus 63 forms a multi-color image on the record paper using toners of multiple colors (in the embodiment, cyan, magenta, yellow, and black) in combination. The record paper passed through the image formation apparatus 63 is sent to a downstream fuser 65, which then fixes the toner image on the record paper. Further, the record paper passed through the fuser 65 is ejected through a paper ejection roller 67 to a second paper ejection tray 69 provided on the front of the main unit.

The fuser 65 is provided on a side of the image formation apparatus 63 and downstream in the transport direction of the record paper and includes a heating roller 311, a press roller 312, and the paper ejection roller 67. The heating roller 311 includes a halogen lamp as a heater 313 in a metal tube. The press roller 312 is placed opposed to the heating roller 311 above the heating roller 311 so as to press heating roller 311 from above. The paper ejection roller 67 is provided downstream in the transport direction of the record paper relative to the heating roller 311 and the press roller 312. The toner transferred to the record paper is thermally fused and is fixed on the record paper while the record paper (toner) passes through the nip between the heating roller 311 and the press roller 312. The record paper is ejected through the paper ejection roller 67 to the second paper ejection tray 69 provided on the front of the main unit.

The image formation apparatus 63 operates a laser light scanner 71 to apply laser light to a photoconductive drum and forms an electrostatic latent image on the surface of the photoconductive drum. The laser light scanner 71 includes a laser emission section 77 for emitting laser light based on the image data in accordance with a command from the CPU 39, a lens 78 for reflecting laser light, a reflecting mirror 79 for introducing the laser light reflected on the lens 78 into the photoconductive drum, and the like. In addition, the image formation apparatus 63 includes a toner tank 73 for storing toner and deposits toner supplied from the toner tank 73 on the photoconductive drum after the electrostatic latent image is formed and gives charges to the record paper for transferring the toner deposited on the photoconductive drum to the record paper by a transfer roller 75.

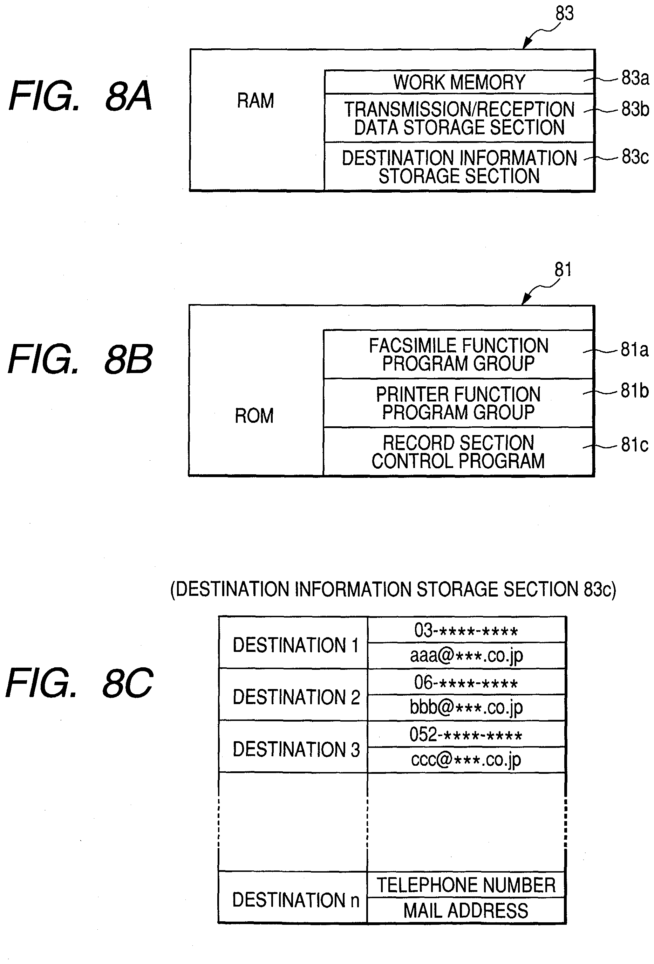

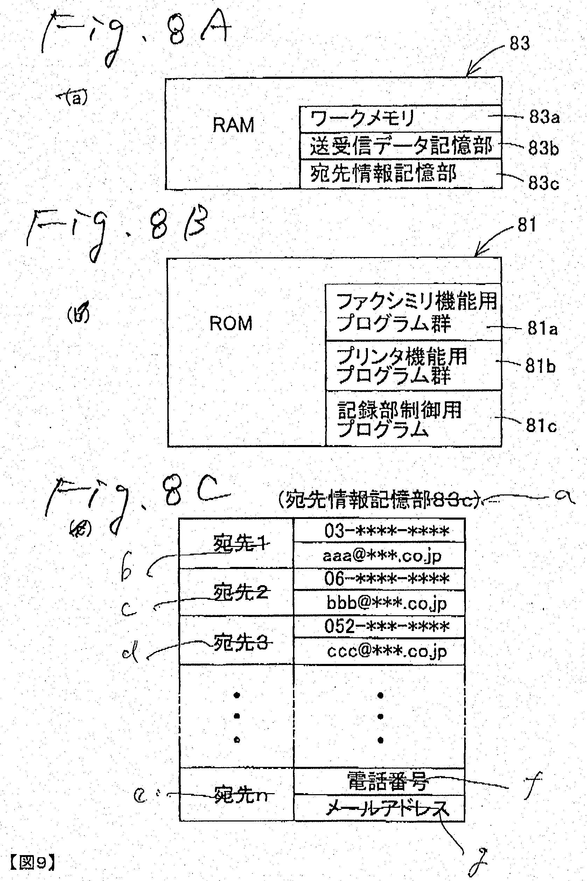

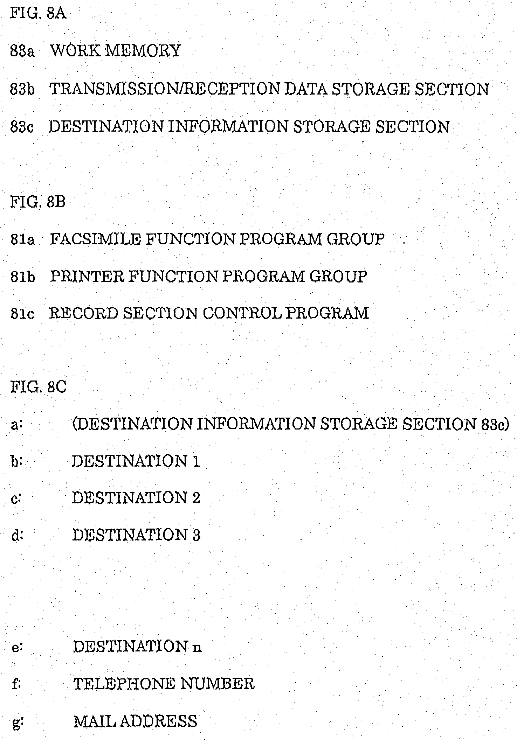

Next, the electric configuration of the facsimile machine 1 will be discussed. FIG. 7 is a block diagram to represent the electric configuration of the facsimile machine 1 in the embodiment. FIG. 8A is a schematic representation to represent the data structure in RAM 83, FIG. 8B is a schematic representation to represent the data structure in ROM 81, and FIG. 8C is a schematic representation to represent the data structure in a destination information storage section 83c (described later).

The facsimile machine 1 mainly includes the CPU 39, the ROM 81, the RAM 83, the scanner section 35, a coder 85, the record section 37, a decoder 87, the operation keys 270, the LCD 274, a modem 89, the line control section 3, the PC interface (PC I/F) 24, a mail control section 91, and a function expansion interface (I/F) 93, which are connected by a bus 95. The communication module 5 is connected to the function expansion interface 93.

The CPU 39 bears the nucleus of control of the facsimile machine and totally controls the whole facsimile machine. That is, for example, the CPU 39 reads a control processing program previously stored in the ROM 81 and executes processing of transmission and reception of facsimile data, destination registration, etc., in accordance with the program.

The ROM 81 stores a facsimile function program group 81a required for operating the facsimile machine 1 as a facsimile (see FIG. 8B). Specifically, for example, a reception program for causing the record section 37 to form an image based on the facsimile data received by the line control section 3 from the external facsimile machine 23 and the like are stored in the ROM 81 as the facsimile function program group.

The ROM 81 also stores a printer function program group 81b required for operating the facsimile machine 1 as a printer for printing data transmitted from the PC, etc. Specifically, for example, a PC print program for causing the record section 37 to form an image based on the data received by the communication module 5 from the PC 13 or the PC 14 in the LAN is stored in the ROM 81 as the printer function program.

In addition, the ROM 81 previously stores a record section control program 81c called by the above-mentioned program, etc., other various programs (not shown), and various pieces of data required at the execution time of the programs.

On the other hand, the RAM 83 functions as work memory 83a required for performing various types of control (see FIG. 8A), a transmission/reception data storage section 83b for storing facsimile data, etc., and the above-mentioned destination information storage section 83c for storing destination information concerning the destinations of facsimile data.

The destination information storage section 83c can record telephone numbers as the destination information concerning the destinations of facsimile data and further can store mail addresses in association with the telephone numbers, as shown in FIG. 8C. That is, to deal with the case where the associated machine (external facsimilemachine 23) can transmit and receive electronic mail via the Internet as well as transmit and receive facsimile data via the public switched telephone network, the facsimile machine 1 enables the user to register destination information in the format in which both the telephone number and the mail address are entered for one destination.

The scanner section 35 reads an original to transmit facsimile data, copy an original, etc. The scanner section 35 in the embodiment acquires an original from the original feed tray 33, reads an image in the reader 47, and outputs image data as the read result to the coder 85, etc., as described above.

The coder 85 executes coding processing to convert the image data read by the scanner section 35 into image data in a G3 compression format of a fax format, and outputs the provided image data.

On the other hand, the decoder 87 decodes the image data in the fax format into image data that can be processed in the record section 37.

The record section 37 functions as a color laser printer that can form a color image, as described above, and uses the image formation apparatus 63 to print a color image based on the image data provided by the decoder 87 on record paper in accordance with a command from the CPU 39 executing the record section control program 81c, and outputs the record paper with the color image printed thereon.

The record section 37 in the embodiment includes a silent print mode for enabling an image to be formed in a lower sound than usual in addition to the usual print mode, and is switched between the print modes for operation in accordance with a command from the CPU 39. The record section 37 can also execute single-color print and can print an image using only the specified color toner in accordance with a command from the CPU 39.

In addition, the operation keys 270 are provided on the operation panel 27 as described above; the user operates the operation keys 270 to enter command signals in the machine (CPU 39, etc.,) for performing various types of processing operation such as destination information registration, destination specification, and memo information input and selection.

The LCD 274 on the operation panel 27 is provided as display means for displaying various messages such as an operation procedure guide message for the user and an error message. The LCD 274 in the embodiment includes a touch panel function; for the user to specify the destination of facsimile data or register destination information, the LCD 274 displays touch keys and inputs user's operation information into the machine.

The modem 89 is provided for transmitting and receiving facsimile data to and from the external facsimile machine 23 connected to the public switched telephone network via the splitter 8 through the line control section 3. The line control section 3 sends a dial signal to the public switched telephone network, responds to a ringing signal from the public switched telephone network, etc., and connects itself to the external facsimile machine 23 through the public switched telephone network so that the facsimile machine 1 can communicate with the external facsimile machine 23.

On the other hand, the PC interface 24 is used to connect PC and the facsimile machine 1 through a parallel interface, etc., and receives code data, etc., from the PC.

The mail control section 91 transmits and receives electronic mail to and from external communication units connected to the Internet, thereby accomplishing transmission and reception of facsimile data by electronic mail.

That is, the mail control section 91 converts binary image data in the fax format coded by the coder 85 into image data of text code and adds header information including the mail address of the destination and the like to the image data, thereby converting the image data in the fax format into image data in the electronic mail format that can be transmitted as electronic mail. Inversely, the mail control section 91 converts image data in the electronic mail format received through the communication module 5 via the Internet into image data in the fax format. This image data in the fax format provided by the mail control section 91 is decoded by the decoder 87 into image data that can be output in the record section 37 before printing on record paper.

The function expansion interface (I/F) 93 is a serial interface such as AIO (analog input/output) or RS232C for making it possible to detachably connect the communication module 5 including the router control section 101 formed as a separate body. The communication module 5 is housed in a main unit cabinet 25 of the facsimile machine as shown in FIG. 6.

The communication module 5 includes the router control section 101, a hub 103, an IP telephone section 105, a radio processing section 107, a web print section 110, an Interface connection terminal 109 to the router control section 101, and the like. The communication module 5 is connected through the Interface connection terminal 109 to the Internet.

The router control section 101 transmits and receives an IP packet to and from a communication unit in the Internet through the ADSL modem 9, and functions as a broadband router including a known IP masquerade function and routing function.

That is, the router control section 101 executes interconversion between the private IP address used in the LAN and the global IP address used in the WAN (in the embodiment, the Internet) by the IP masquerade function, and connects any of the terminals in the LAN and the communication unit in the WAN (WWW server 21) by the routing function so that two-way communications can be conducted therebetween.

For example, the router control section 101 communicates with any of the LAN terminals 13 to 17 in the LAN connected to the LAN connection port 7 through the hub 103, thereby connecting the LAN terminal 13 to 17 in the LAN to the Internet so that two-way communications can be conducted therebetween. That is, for example, the router control section 101 performs routing control for transmitting data received from the WWW server 21 in the Internet to the LAN terminal 13 to 17 as the destination.

In addition, the router control section 101 can communicate with the CPU 39 in the facsimile machine main unit through the function expansion interface 93. That is, the LAN terminals 13 to 17, the IP telephone section 105, the radio processing section 107, and the web print section 110 can conduct two-way communications with the CPU 39 in the facsimile machine main unit through the router control section 101 and the function expansion interface 93. For example, if the CPU 39 of the facsimile machine 1 acquires print code data from the PC 13 or the PC 14 in the LAN through the router control section 101, the CPU 39 executes the printer function program and calls the record section control program 81c in the printer function program for controlling the record section 37 to form an image based on the print code data.

On the other hand, the IP telephone section 105 connected to the router control section 101 through the hub 103 can store a voice signal in an IP packet and can conduct voice communications (conversation) with an external IP telephone via the Internet.

The radio processing section 107 enables the facsimile machine 1 to conduct radio communications with an external radio communication unit, and connects an external radio communication unit to each section in the facsimile machine 1 so that two-way communications can be conducted therebetween by a radio connection system based on the Bluetooth standard (short-distance radio communication standard) or IrDA standard (infrared communication standard). That is, in the facsimile machine 1, the LAN connection port 7 connected to the hub 103 can be used to connect each LAN terminal 13 to 17 to the facsimile machine 1 by the wired connection system and in addition, the radio processing section 107 can be used to connect each LAN terminal 13 to 17 to the facsimile machine 1 by the radio connection system.

In addition, the web print section 110 includes a CPU 111, ROM 113, RAM 115, a network interface 117, and the like; it communicates with the router control section 101 through the network interface 117, thereby connecting the web print section 110 to the Internet and communicating with the CPU 39 in the facsimile machine main unit.

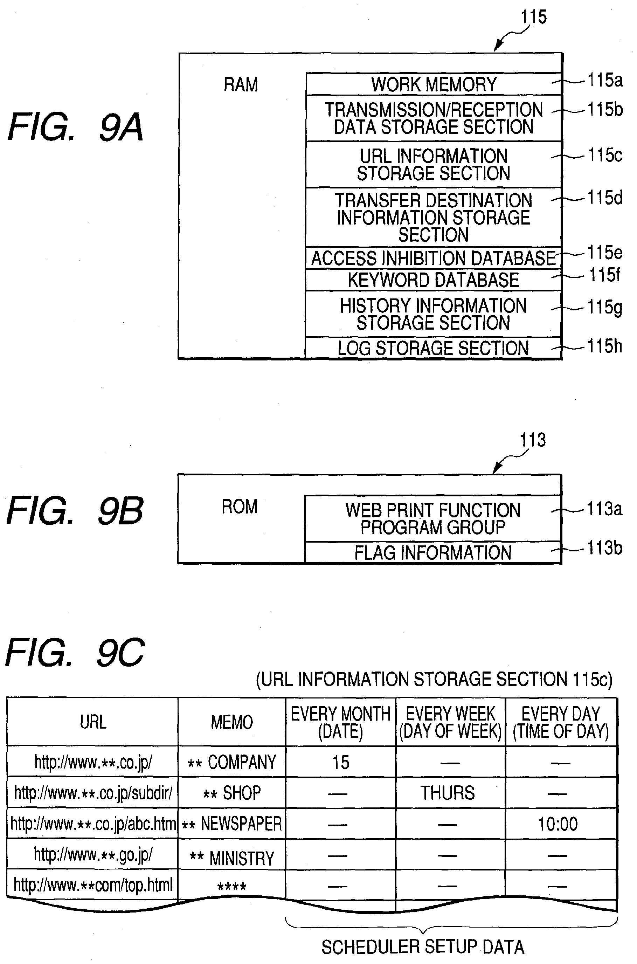

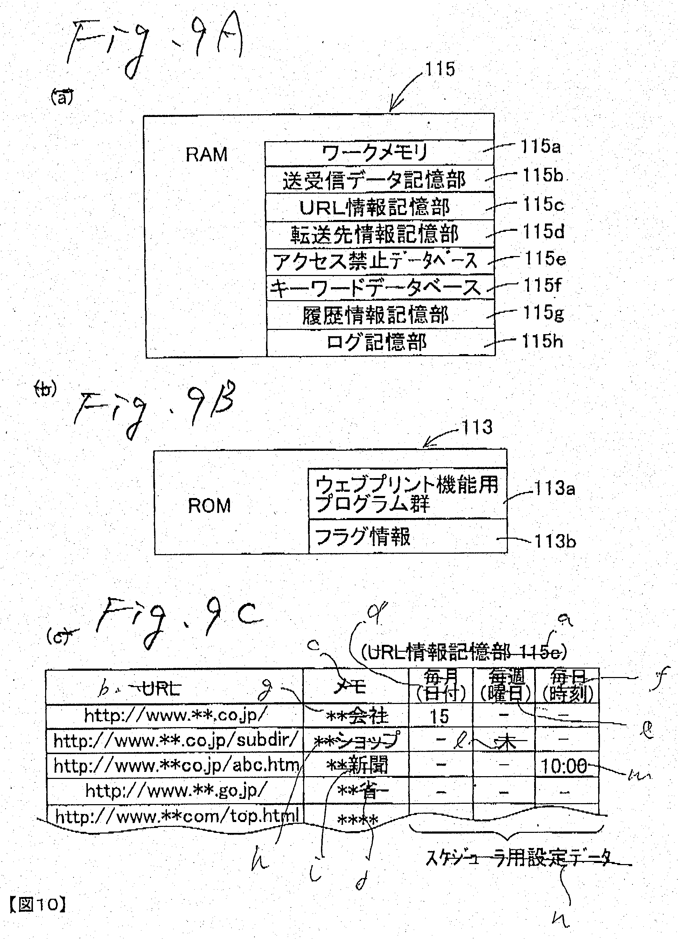

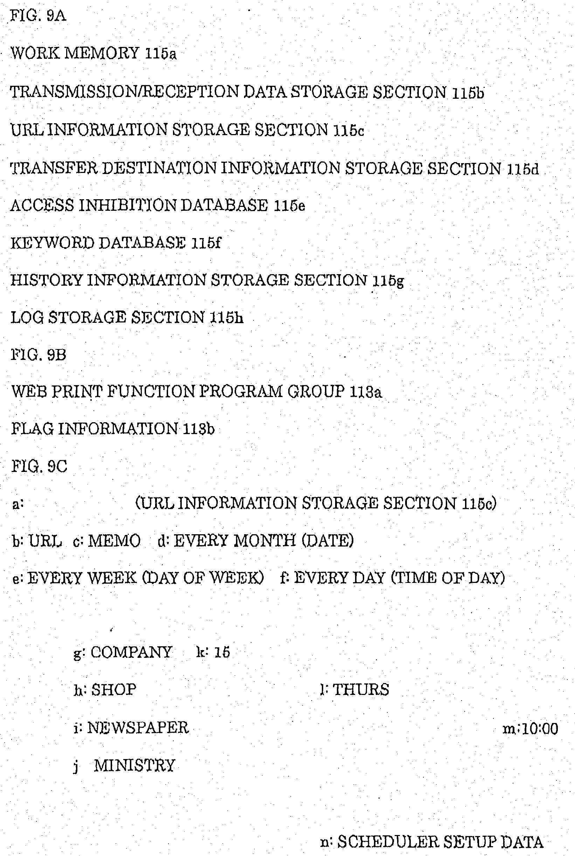

FIG. 9A is a schematic representation to represent the data structure in the RAM 115 of the web print section 110 and FIG. 9B is a schematic representation to represent the data structure in the ROM 113.

The RAM 115 in the web print section 110 functions as work memory 115a, a transmission/reception data storage section 115b for storing download data acquired from the WWW server 21, etc., a URL information storage section 115c for storing address (URL (Uniform Resource Locator)) information for the WWW server 21, a transfer destination information storage section 115d for storing transfer destination information concerning the data transfer destination to use a transfer function described later, an access inhibition database 115e, a keyword database 115f, a history information storage section 115g, a log storage section 115h, and the like, as shown in FIG. 9A.

The URL information storage section 115c can store a plurality of pieces of memo information and scheduler setup data in association with the URLs representing the data providing parties, as shown in FIG. 9C.

That is, the communication module 5 can register memo information externally entered by the user operating the operation panel 27, etc. , in the URL information storage section 115c in association with the corresponding URLs. The URL is address information made up of the server address, directory information, file name, etc., as known.

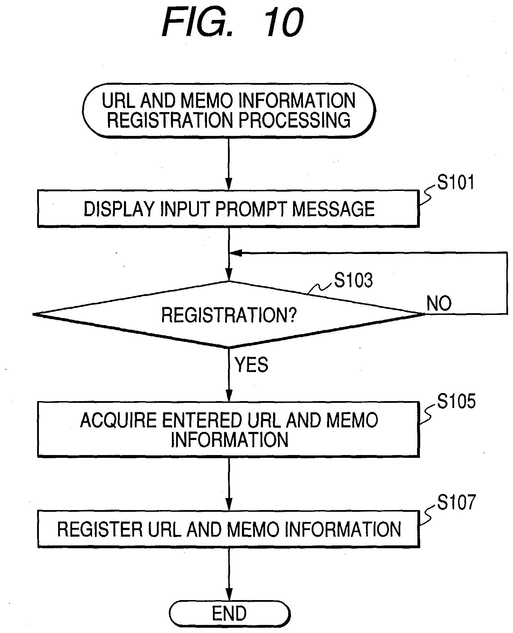

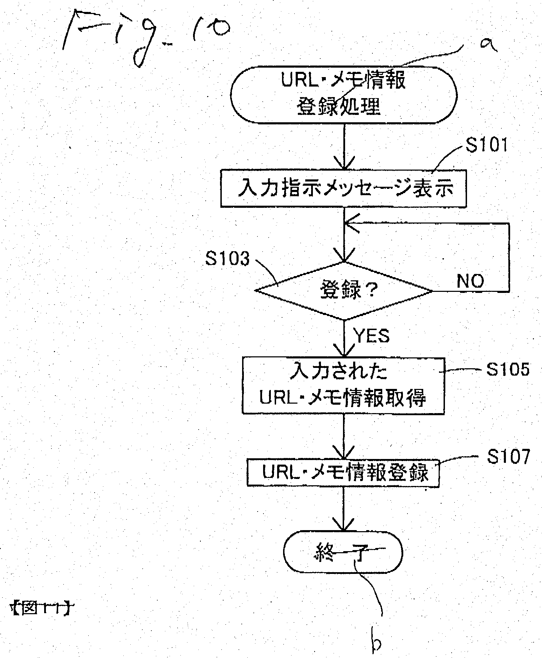

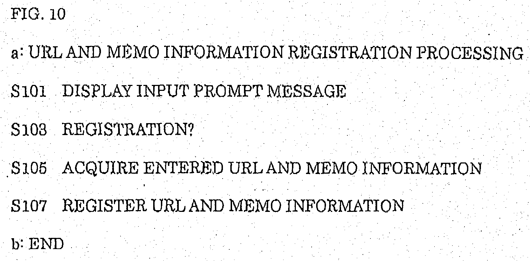

URL and memo information registration processing will be discussed with reference to FIG. 10, which is a flowchart to represent the URL and memo information registration processing executed by the CPU 111 of the web print section 110. To execute the processing, at S101, the CPU 111 transmits an input prompt message for requesting the user to enter URL and memo information through the interface 93 to the facsimile machine main unit, thereby causing the LCD 274 of the facsimile machine main unit to display the input prompt message. After this, at S103, the CPU 111 waits until a registration command of URL and memo information is transmitted through the interface 93 from the operation panel 27. Upon reception of a registration command, at S105, the CPU 111 acquires the URL and memo information entered through the operation panel 27 from the facsimile machine main unit and further at S107, stores the URL and memo information in association with each other into the URL information storage section 115C. The memo information is provided for enabling the user to determine the URL in an instant because the URL is written in alphabetical characters in the present circumstances and it is hard to understand what home page is to be accessed from only the indication of the URL and further the display area of the LCD 274 is also limited and thus it is not easy to find out the target URL.

In addition, the transfer destination information storage section 115d stores address information for printer transfer and address information for PC transfer (described later). The transfer destination information storage section 115d stores the port number in addition to the private IP address in the LAN as the address information for printer transfer and PC transfer.

On the other hand, the ROM 113 in the web print section 110 stores a web print function program group 113a for executing processing for acquiring data from the WWW server 21 and causing the record section 37 of the facsimile machine to print download data acquired from the WWW server 21 (described later), flag information 113b to represent operation conditions when the web print function operates, and the like, as shown in FIG. 9B.

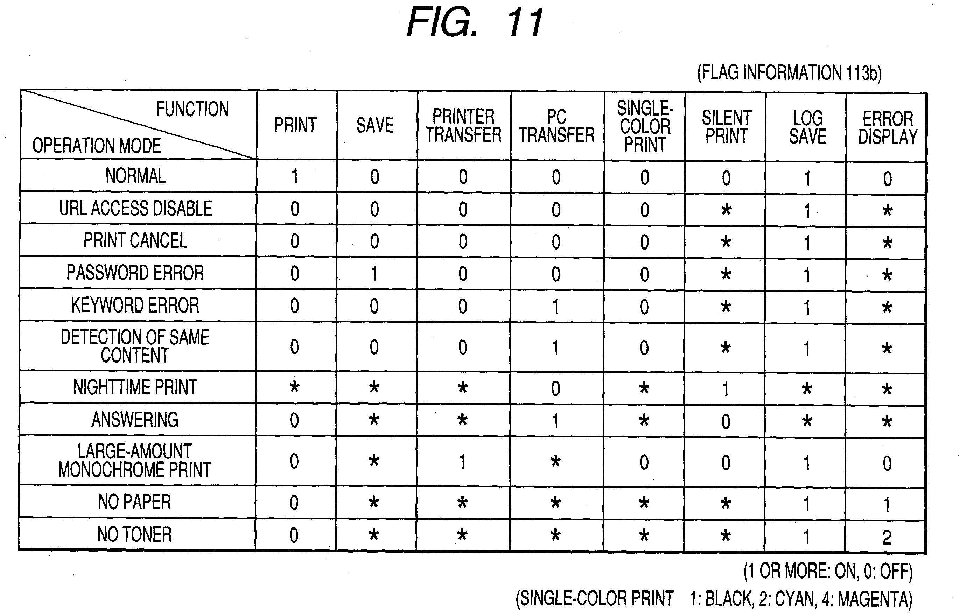

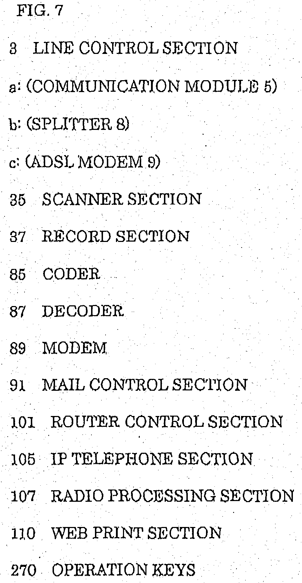

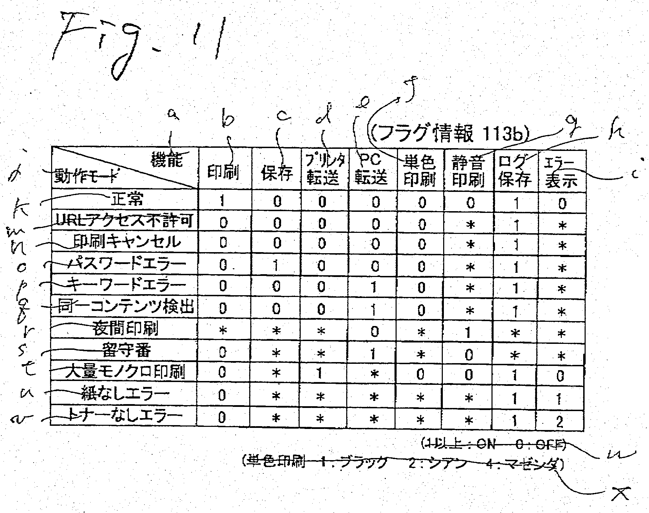

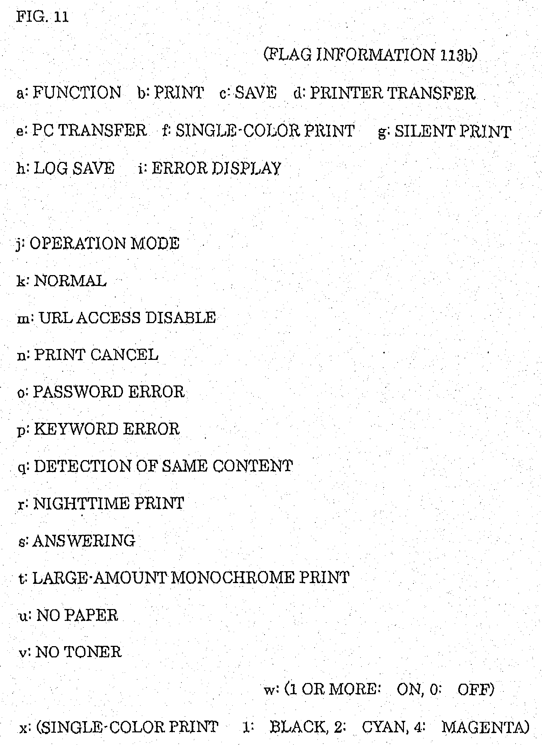

In more particular, the web print section 110 includes a print function of causing the record section 37 to print an image based on download data acquired from the WWW server 21 via the router control section 101, a save function of temporarily saving data in the RAM 115, a printer transfer function of transferring download data to the transfer destination printer (printer specified by the address information of the printer transfer destination stored in the transfer destination information storage section 115d) 16 connected to the LAN through the LAN connection port 7, a PC transfer function of transferring download data to the PC 13 or the PC 14 connected to the LAN through the LAN connection port 7, a single-color print function of causing the record section 37 to print an image based on download data in a single color, a silent print function of causing the record section 37 to print an image based on download data in the silent print mode with machine noise at the printing time suppressed, a log save function of saving log information concerning the processing executed by the web print section 110, an error information display function of causing the LCD 274 to display an error message, and the like. These functions are provided by the web print function program group 113a stored in the ROM 113 and each of the functions is switched on and off based on the flag information 113b shown in FIG. 11.

FIG. 11 is a schematic representation to represent the composition of the data stored in the ROM 113 as the flag information 113b.

The web print section 110 selects any of NORMAL operation mode, URL ACCESS DISABLE operation mode, PRINT CANCEL operation mode, PASSWORD ERROR operation mode, KEYWORD ERROR operation mode, DETECTION OF SAME CONTENT operation mode, NIGHTTIME PRINT operation mode, ANSWERING operation mode, LARGE-AMOUNT MONOCHROME PRINT operation mode, NO PAPER operation mode, or NO TONER operation mode shown in FIG. 11 on a predetermined condition, and writes the value of each function, which will be hereinafter referred to as "flag value," into the RAM 115 as flag set information, thereby setting the flag. The web print section 110 operates (turns on) the function when the flag value is 1 or more, and inhibits (turns off) the operation of the function when the flag value is 0. The symbol * in FIG. 11 indicates that the flag value stored as the flag set information before the operation mode is selected is not rewritten.

Next, a multi-function processing apparatus of the embodiment will be discussed. FIG. 3 is a block diagram of a multi-function processing apparatus 301 of the embodiment. The multi-function processing apparatus 301 of the embodiment corresponds to the facsimile machine 1 in FIG. 4 and has also the following features in addition to those of the facsimile machine 1 previously described with reference to FIG. 4: The multi-function processing apparatus 301 of the embodiment is made up of a CPU 302, an NCU 303, RAM 304, an original sensor 305, a heater control section 306, a heater 307, a copy key 321, and the like.

The CPU 302 executes flowcharts described later and corresponds to the CPU 39 in FIG. 4. The NCU 303, which corresponds to the line control section 3 in FIG. 4, includes a line voltage detection section 308, a connector connection detection section 309, and the like and thus can detect whether or not themulti-functionprocessingapparatus 301 is physically connected to a line L4 of a public line network, etc. The RAM 304 is used to execute the flowcharts described later and corresponds to the RAM 83 in FIG. 7. The original sensor 305 corresponds to detection means for detecting the original placed on the original feed tray 33 in FIG. 6. The heater control section 306 controls the temperature of the heater 307. The heater 307 corresponds to the heater 313 in FIG. 6 and is included in the heating roller 311 of the fuser 65 in FIG. 6. When the copy key 321 is pressed, the operation of the copy function is started.

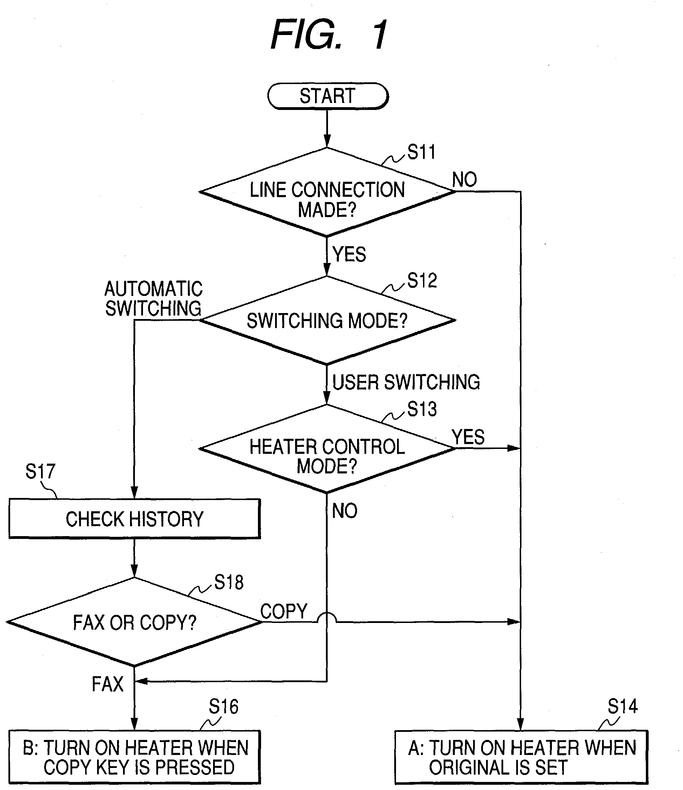

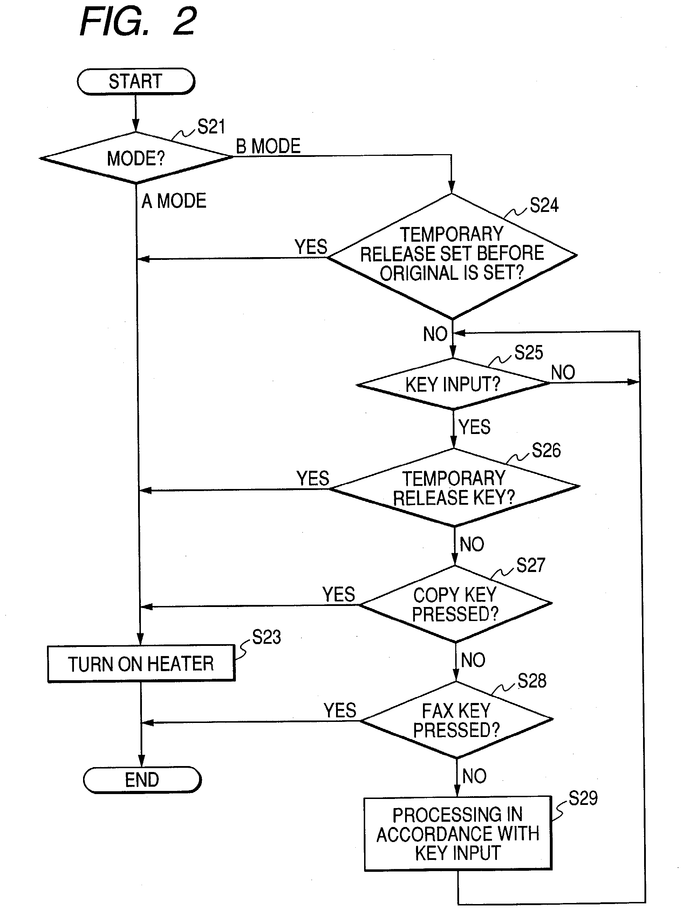

The heater control section 306 will be discussed. When the time during which the copy function does not operate continues and reaches to a given time, from the viewpoint of energy saving, the heater control section 306 drops the temperature of the heater 307 to a lower temperature than the temperature required for operating the copy function (temperature at which the fuser 65 in FIG. 6 can operate) and also raises the temperature of the heater 307 from a lower temperature than the temperature required for operating the copy function (temperature at which the fuser 65 in FIG. 6 can operate) to the temperature required for operating the copy function (temperature at which the fuser 65 in FIG. 6 can operate) based on the execution result of the flowcharts of FIGS. 1 and 2.

The flowchart of FIG. 1 is executed for setting the timing at which the heater control section 306 starts raising the temperature of the heater 307 to raise the temperature of the heater 307 from a lower temperature than the temperature required for operating the copy function (temperature at which the fuser 65 in FIG. 6 can operate) to the temperature required for operating the copy function (temperature at which the fuser 65 in FIG. 6 can operate). This flowchart is executed when the user makes a request of setting the start timing of raising the temperature of the heater 307 to one of "A mode" and "B mode", by operating the operation keys 270 and the liquid crystal display (LCD) 274.

When the user operates the operation key 270 and the liquid crystal display (LCD) 274 to make a request of setting a mode for setting the start timing (START), first, at S11, whether or not the multi-function processing apparatus 301 is physically connected to the line L4 of the public line network, etc., is determined through the NCU 303.

If it is not determined that the multi-function processing apparatus 301 is physically connected to the line L4 of the public line network, etc., (NO at S11), the process proceeds to S14 and the start timing of raising the temperature of the heater 307 is set to "A mode" in which the start timing is just after the original sensor 305 detects an original. On the other hand, if it is determined that the multi-function processing apparatus 301 is physically connected to the line L4 of the public line network, etc., (YES at S11), the process proceeds to S12 and the user is requested to select a switching mode between user switching and automatic switching through the operation keys 270 and the liquid crystal display (LCD) 274 in FIG. 5.

If the user selects the switching mode of user switching at S12, the process proceeds to S13 and the user is requested to make a selection as to whether or not a heater control mode is set through the operation keys 270 and the liquid crystal display (LCD) 274 in FIG. 5. If the user selects setting the heater control mode (YES at S13), the process proceeds to S14 and the start timing of raising the temperature of the heater 307 is set to "A mode" in which the start timing is just after the original sensor 305 detects an original. On the other hand, if the user does not select setting the heater control mode (NO at S13), the process proceeds to S16 and the start timing of raising the temperature of the heater 307 is set to "B mode" in which the start timing is just after the copy key 321 is pressed.

If the user selects the switching mode of automatic switching at S12, the process proceeds to S17 and the history (the operation state of the copy function and the facsimile function) stored in the RAM 304, etc., is checked. Then, the process proceeds to S18 and from the history, a determination is made as to which of the copy function and the facsimile function has been operated a larger number of times about the past operation sequence preceding a predetermined number of times from the previous time. If it is determined that the copy function has been operated a larger number of times about the past operation sequence preceding the predetermined number of times from the previous time, the process proceeds to S14 and the start timing of raising the temperature of the heater 307 is set to "A mode" in which the start timing is just after the original sensor 305 detects an original. On the other hand, if it is determined that the facsimile function has been operated a larger number of times about the past operation sequence preceding the predetermined number of times from the previous time, the process proceeds to S16 and the start timing of raising the temperature of the heater 307 is set to "B mode" in which the start timing is just after the copy key 321 is pressed.

The flowchart of FIG. 2 is executed with detection of an original by the original sensor 305 as a trigger. That is, when the original sensor 305 detects an original, first at S21, which of "A mode" and "B mode" is set according to the flowchart of FIG. 1 is determined. If it is determined that "A mode" is set, the process proceeds to S23 and the heater control section 306 is caused to start raising the temperature of the heater 307 and then the processing is terminated.

On the other hand, if it is determined at S21 that "B mode" is set, it is judged whether temporary release has been set before the original sensor 305 detects the original (S24). Here, the temporary release is set by the user through the operation keys 270 and the liquid crystal display (LCD) 274 in FIG. 5. when it is determined that the temporary release has been set before the original sensor 305 detects the original (YES at S24), the process proceeds to S23 and the heater control section 306 is caused to start raising the temperature of the heater 307 and then the processing is terminated. On the other hand, if it is not determined that the temporary release has been set before the original sensor 305 detects the original (NO at S24), a wait is made for key input (S25). If a key is input (YES at S25), it is judged whether the key input relates to the temporary release (S26). If it is determined that the key input relates to the temporary release (Yes at S26), the process proceeds to S23 and the heater control section 306 is caused to start raising the temperature of the heater 307 and then the processing is terminated. If it is not determined that the key input relates to the temporary release (NO at S26), the process proceeds to S27 and whether or not the copy key 321 is pressed is determined. If it is determined that the copy key 321 is pressed (YES at S27), the process proceeds to S23 and the heater control section 306 is caused to start raising the temperature of the heater 307 and then the processing is terminated. On the other hand, if it is determined that any key other than the copy key 321 is pressed (NO at S27),it is judged whether the key input relates to a facsimile transmission start operation (S28). If it is determined that the key operation relates to the facsimile transmission start operation (Yes at S28), the processing is terminated because the heater 307 is not needed to be turned on. If it is not determined that the key operation relates to the facsimile transmission start operation (NO at S28), a predetermined operation in accordance with the key input is performed (S29) and the processing returns to the state before S25. Then, the processing after S25 is performed again.

Therefore, when the flowcharts of FIGS. 1 and 2 are executed, the start timing of raising the temperature of the heater 307 is set to either "A mode" in which the start timing is just after the original sensor 305 detects an original or "B mode" in which the start timing is just after the copy key 321 is pressed.

As described in detail, the multi-function processing apparatus 301 of the embodiment has also the features of the facsimile machine 1 in FIG. 4 and thus if the original detected by the original sensor 305 is taken in the machine, the image data of the original is read in the scanner section 35. On the other hand, if the copy key 321 is pressed, execution of the copy function of the image formation apparatus 63 , the fuser 65, etc., for forming the image data read in the scanner section 35 on record paper is started. At this time, if the time during which the copy function does not operate continues and reaches to a given time, the heater control section 306 drops the temperature of the heater 307 (corresponding to the heater 313 included in the fuser 65) for thermally fusing the toner transferred to record paper to a lower temperature than the temperature at which the copy function can be executed from the viewpoint of energy saving, etc. Therefore, to execute the copy function, the temperature of the heater 307 must be raised to the temperature at which the copy function can be executed.

In this point, the multi-function processing apparatus 301 of the embodiment provides "A mode" to start raising the temperature of the heater 307 just after the original sensor 305 detects an original or "B mode" to start raising the temperature of the heater 307 just after the copy key 321 is pressed for the start timing of raising the temperature of the heater 307 according to the flowchart of FIG. 1. As the flowchart of FIG. 2 is executed, raising the temperature of the heater 307 can be started at the timing of either "A mode" or "B mode."

Since "A mode" starts to raise the temperature of the heater 307 just after the original sensor 305 detects an original, the fast copy wait time is shortened as compared with "B mode," but "A mode" is not fitted for energy saving. On the other hand, "B mode" starts to raise the temperature of the heater 307 just after the copy key 321 is pressed and thus is fitted for energy saving as compared with "A mode," but the fast copy wait time is prolonged.

In the multi-function processing apparatus 301 of the embodiment, as the flowchart of FIG. 2 is executed, raising the temperature of the heater 307 can be started in either "A mode" to start raising the temperature of the heater 307 just after the original sensor 305 detects an original or "B mode" to start raising the temperature of the heater 307 just after the copy key 321 is pressed as the start timing of raising the temperature of the heater 307 determined from the viewpoint of shortening the fast copy wait time or energy saving. Further, as the flowchart of FIG. 1 is executed, the start timing of raising the temperature of the heater 307 can be set in either "A mode" to start raising the temperature of the heater 307 just after the original sensor 305 detects an original or "B mode" to start raising the temperature of the heater 307 just after the copy key 321 is pressed. Thus, user's intention or the machine use environment of the user can be reflected to change the start timing of raising the temperature of the heater 307.

The multi-function processing apparatus 301 of the embodiment has also the features of the facsimile machine 1 in FIG. 4 and thus includes the facsimile function of transmitting the image data read in the scanner section 35 as facsimile data. As shown in FIG. 1, if it is not determined that the multi-function processing apparatus 301 of the embodiment including the facsimile function is physically connected to the line L4 of the public line network, etc., (NO at S11), the facsimile function of the multi-function processing apparatus 301 of the embodiment cannot be executed and the copy function can be executed and thus the process proceeds to S14 and the start timing of raising the temperature of the heater 307 is set to "A mode" in which the start timing is just after the original sensor 305 detects an original. Therefore, the fast copy wait time can always be shortened for the executable copy function, so that the machine use environment of the user can be reflected to change the start timing of raising the temperature of the heater 307 determined from the viewpoint of shortening the fast copy wait time or energy saving.

In the multi-function processing apparatus 301 of the embodiment, as shown in FIG. 1, if the user selects the switching mode of automatic switching at S12, when it is determined at S18 that the copy function has been operated a larger number of times about the past operation sequence preceding the predetermined number of times from the previous time, the probability that the next operation will be the copy function is great and thus the start timing of raising the temperature of the heater 307 is automatically set to "A mode" in which the start timing is just after the original sensor 305 detects an original. On the other hand, if it is determined at S18 that the facsimile function has been operated a larger number of times about the past operation sequence preceding the predetermined number of times from the previous time, the probability that the next operation will be the facsimile function is great and thus the start timing of raising the temperature of the heater 307 is automatically set to "B mode" in which the start timing is just after the copy key 321 is pressed. Thus, the machine use environment of the user can be reflected to change the start timing of raising the temperature of the heater 307 determined from the viewpoint of shortening the fast copy wait time or energy saving.

In the multi-function processing apparatus 301 of the embodiment, as shown in FIG. 1, if the user selects the switching mode of user switching at S12, the user can manually set the start timing of raising the temperature of the heater 307 as "A mode" in which the start timing is just after the original sensor 305 detects an original (YES at S13) or "B mode" in which the start timing is just after the copy key 321 is pressed (NO at S13) through the operation keys 270 and the liquid crystal display (LCD) 274 in FIG. 5. Thus, the user's intention can be reflected to change the start timing of raising the temperature of the heater 307 determined from the viewpoint of shortening the fast copy wait time or energy saving.

In the multi-function processing apparatus 301 of the embodiment, as shown in FIG. 2, at S24 or S26, the user can make a selection as to whether or not temporary release is set through the operation keys 270 and the liquid crystal display (LCD) 274 in FIG. 5. If the user selects setting temporary release (YES at S24 or YES at S26), the process proceeds to S23 so that "B mode" in which the start timing of raising the temperature of the heater 307 is just after the copy key 321 is pressed is released and the heater 307 is turned on. On the other hand, if the user does not select setting temporary release (NO at S24 and NO at S26), the start timing of raising the temperature of the heater 307 is kept as "B mode" in which the start timing is just after the copy key 321 is pressed. Thus, temporary change in user's intention or temporary change in the machine use environment of the user can also be reflected to change the start timing of raising the temperature of the heater 307 determined from the viewpoint of shortening the fast copy wait time or energy saving.

It is to be understood that the invention is not limited to the specific embodiment described above and changes and variations may be made without departing from the spirit and the scope of the invention.

For example, in the above-described embodiment, the user is requested to select a switching mode between user switching and automatic switching at S12 and also requested to make a selection as to whether or not a heater control mode is set at S13 through the operation keys 270 and the liquid crystal display (LCD) 274 in Fig. 5. However, the user can select a switching mode between user switching and automatic switching and make a selection as to whether or not a heater control mode is set through the operation keys 270 and the liquid crystal display (LCD) 274 in Fig. 5 before the flowchart is executed. In such a case, START, S12, S13 in the flowchart of Fig.1 are executed in the following manner and the other steps in the flowchart of Fig.1 are executed in the same manner as described above. The flowchart of Fig.1 is stated when the power is turned on or on a regular basis. It is determined at S12 which switching mode of the user switching and automatic switching the user has selected before the flowchart of Fig.1 is executed. If it is determined that the user has selected the switching mode of user switching, the process proceeds to S13. On the other hand, if it is determined that the user has selected the switching mode of automatic switching, the process proceeds to S17. It is determined at S13 which of setting the heater mode and not-setting-the-heater mode the user has selected before the flowchart of Fig. 1 is executed. If it is determined that the user has selected setting the heater control mode, the process proceeds to S14. On the other hand, if it is determined that the user has selected not-setting-the-heater-control mode, the process proceeds to S16. The user's intention and the machine use environment of the user can also be reflected to change the start timing of raising the temperature of the heater 307 in this case.

In the multi-function processing apparatus 301 of the embodiment, as shown in FIG. 1, at S12, the user needs to select user switching or automatic switching as the switch mode, but the multi-function processing apparatus 301 may have only either user switching or automatic switching as the switch mode.

In the multi-function processing apparatus 301 of the embodiment, as shown in FIG. 1, if automatic switching is selected as the switch mode at S12, the process proceeds to S17 and the history (the operation state of the copy function and the facsimile function) stored in the RAM 304, etc., is checked. In this point, whether the previous start timing of raising the temperature of the heater 307 is "A mode" or "B mode" may be checked as the history. In this case, whether the previous start timing of raising the temperature of the heater 307 is "A mode" or "B mode" is determined at S18. When it is determined that the previous start timing is "A mode," the process proceeds to S14 and the start timing of raising the temperature of the heater 307 continues to be set to "A mode." On the other hand, when it is determined that the previous start timing is "B mode," the process proceeds to S16 and the start timing continues to be set to "B mode."

In the multi-function processing apparatus of the invention, raising the temperature of the fixing unit can be started in either the first control processing for starting to raise the temperature of the fixing unit based on detection of the original by the original detection unit or the second control processing for starting to raise the temperature of the fixing unit based on the copy operation instruction given by the copy instruction unit as the start timing of raising the temperature of the fixing unit determined from the viewpoint of shortening the fast copy wait time or energy saving. Further, the start timing of raising the temperature of the fixing unit can be set in either the first control processing or the second control processing by the control processing setting unit. Thus, user's intention or the machine use environment of the user can be reflected to change the start timing of raising the temperature of the fixing unit.

Further, if the multi-function processing apparatus of the invention also includes the connection state detection unit for detecting whether or not the transmission unit for transmitting the data read through the read unit to an external system is connected to an external unit, when the connection state detection unit detects the transmission unit being unconnected to an external unit, the transmission unit cannot be executed and the copy unit can be executed. Thus, if the control processing of the fixing control unit is set to the first control processing by the control processing setting unit, the fast copy wait time can always be shortened for the executable copy operation, so that the machine use environment of the user can be reflected to change the start timing of raising the temperature of the fixing unit determined from the viewpoint of shortening the fast copy wait time or energy saving.

Further, in the multi-function processing apparatus of the invention, if the control processing setting unit has the manual setting mode of manual operation and the automatic setting mode and the control processing of the fixing control unit can be set according to the setup setting mode, to set the control processing of the fixing control unit according to the automatic setting mode of the control processing setting unit, it is made possible to set the control processing of the fixing control unit based on the execution result of the copy operation and the transmission unit, etc. Thus, the machine use environment of the user can be reflected reliably to change the start timing of raising the temperature of the fixing unit determined from the viewpoint of shortening the fast copy wait time or energy saving.

On the other hand, to set the control processing of the fixing control unit according to the manual setting mode of the control processing setting unit, it is made possible for the user to set the control processing of the fixing control unit by manual operation, so that user's intention can be reflected reliably to change the start timing of raising the temperature of the fixing unit determined from the viewpoint of shortening the fast copy wait time or energy saving.

If the multi-function processing apparatus of the invention further includes control processing instruction unit that can be manually operated for causing the control processing setting unit to set the control processing of the fixing control unit to the first control processing regardless of the setup state of the control processing of the fixing control unit in the automatic setting mode and the manual setting mode, temporary change in user's intention or temporary change in the machine use environment of the user can also be reflected to change the start timing of raising the temperature of the fixing unit determined from the viewpoint of shortening the fast copy wait time or energy saving.

While the invention has been described in conjunction with the specific embodiments described above, many equivalent alternatives, modifications and variations may become apparent to those skilled in the art when given this disclosure. Accordingly, the exemplary embodiments of the invention as set forth above are considered to be illustrative and not limiting. Various changes to the described embodiments may be made without departing from the scope of the invention.

## Claims

1. A multi-function processing apparatus, comprising:
an original detection unit (305) that is configured to detect a set original;
a read unit (35) that is configured to read an image on the original;
an image formation unit (37) that is configured to form an image on a recording medium in toner;
a fixing unit (307) that is configured to heat the toner image formed on the recording medium;
a copy instruction unit (321) that is configured to give a copy operation instruction for causing the read unit (35) to read the image of the set original and for causing the image formation unit (37) to form the image on the recording medium;
a fixing control unit (306) that is configured to perform a first control processing for starting to raise a temperature of the fixing unit (307) based on detection of the original by the original detection unit (305) and is configured to perform a second control processing for starting to raise the temperature of the fixing unit (307) based on the copy operation instruction given by the copy instruction unit (321);
a control processing setting unit (302) configured to set the control processing performed by the fixing control unit (306) to either the first control processing or the second control processing:
a transmission unit (303) that is configured to transmit data read through the read unit (35) to an external system; and
a processing storage unit (304) that is configured to store a history of transmission processing of the read data or copy processing of the read data;
wherein the control processing setting unit (302) is configured to determine one of the transmission processing and the copy processing which has been performed more frequently based on the history of the past processing, and is configured to set the control processing of the fixing control unit (306) to one of the first control processing and the second control processing according to the determination.

2. The multi-function processing apparatus as claimed in claim 1, further comprising:
a connection state detection unit (308, 309) that is configured to detect whether or not the transmission unit (303) is connected to an external unit;
wherein, when the connection state detection unit (308, 309) detects the transmission unit (303) being unconnected to an external unit, the control processing setting unit (302) sets the control processing of the fixing control unit (306) to the first control processing.

3. The multi-function processing apparatus as claimed in claim 2,
wherein the transmission unit (303) includes a facsimile unit that transmits the image data read through the read unit (35) as facsimile data; and
the connection state detection unit (308, 309) is configured to detect whether the facsimile unit is connected to a public line network.

4. The multi-function processing apparatus as claimed in claim 1,
wherein the control processing setting unit (302) has a manual setting mode of manual operation and an automatic setting mode and is configured to set the control processing performed by the fixing control unit (306) according to the setup setting mode.

5. The multi-function processing apparatus as claimed in claim 4,
wherein, when the control processing setting unit (302) is set to the automatic setting mode, the control processing setting unit sets the control processing of the fixing control unit based on the history of past processing stored in the processing storage unit (304).

6. The multi-function processing apparatus as claimed in claim 4, further comprising:
a manual processing switching unit (270);
wherein, when the control processing setting unit (302) is set to the manual setting mode, the control processing setting unit (302) sets the control processing of the fixing control unit (307) based on operation of the manual processing switching unit (270).

7. The multi-function processing apparatus as claimed in claim 1, further comprising: a control processing instruction unit that is manually operational;
wherein the control processing instruction unit is configured to cause the control processing setting unit (302) to set the control processing of the fixing control unit (306) to the first control processing regardless of the setup state of the control processing of the fixing control unit (306).

## Patentansprüche

1. Multifunktionsverarbeitungsvorrichtung, umfassend:
eine Originalerfassungseinheit (305), die konfiguriert ist, um ein eingesetztes Original zu erfassen;
eine Leseeinheit (35) die konfiguriert ist, um ein Bild auf dem Original zu lesen;
eine Bilderzeugungseinheit (37), die konfiguriert ist, um ein Bild auf einem Aufzeichnungsmedium in Toner zu erzeugen;
eine Fixiereinheit (307), die konfiguriert ist, um das Tonerbild, das auf dem Aufzeichnungsmedium erzeugt wird, aufzuwärmen;
eine Kopieranweisungseinheit (321), die konfiguriert ist, um eine Kopiervorgangsanweisung zu geben, um die Leseeinheit (35) dazu zu veranlassen, das Bild des eingesetzten Originals zu lesen und um die Bilderzeugungseinheit (37) dazu zu veranlassen, das Bild auf dem Aufzeichnungsmedium zu erzeugen;
eine Fixiersteuereinheit (306), die konfiguriert ist, eine erste Steuerverarbeitung durchzuführen, um zu beginnen, eine Temperatur der Fixiereinheit (307) basierend auf der Erfassung des Originals durch die Originalerfassungseinheit (305) zu erhöhen, und konfiguriert ist, um eine zweite Steuerverarbeitung durchzuführen, um zu beginnen, die Temperatur der Fixiereinheit (307) basierend auf der Kopiervorgangsanweisung zu erhöhen, die durch die Kopieranweisungseinheit (321) gegeben wird;
eine Steuerverarbeitungseinstelleinheit (302), die konfiguriert ist, um die Steuerverarbeitung, die durch die Fixiersteuereinheit (306) durchgeführt wird, entweder auf die erste Steuerverarbeitung oder die zweite Steuerverarbeitung einzustellen:
eine Übertragungseinheit (303), die konfiguriert ist, um Daten, die durch die Leseeinheit (35) gelesen werden, an ein externes System zu übertragen; und
eine Verarbeitungsspeichereinheit (304), die konfiguriert ist, um einen Übertragungsverarbeitungsverlauf der gelesenen Daten oder eine Kopierverarbeitung der gelesenen Daten zu speichern;
wobei die Steuerverarbeitungseinstelleinheit (302) konfiguriert ist, um eines der Übertragungsverarbeitung und der Kopierverarbeitung zu bestimmen, die basierend auf dem Verlauf der vergangenen Verarbeitung häufiger durchgeführt wurde, und konfiguriert ist, um die Steuerverarbeitung der Fixiersteuereinheit (306) auf eine der ersten Steuerverarbeitung oder der zweiten Steuerverarbeitung gemäß der Bestimmung einzustellen.

2. Multifunktionsverarbeitungsvorrichtung nach Anspruch 1, ferner umfassend:
eine Verbindungsstatuserfassungseinheit (308, 309), die konfiguriert ist, um zu erfassen, ob die Übertragungseinheit (303) mit einer externen Einheit verbunden ist oder nicht;
wobei die Steuerverarbeitungseinstelleinheit (302), wenn die Verbindungsstatuserfassungseinheit (308, 309) erfasst, dass die Übertragungseinheit (303) nicht mit einer externen Einheit verbunden ist, die Steuerverarbeitung der Fixiersteuereinheit (306) auf die erste Steuerverarbeitung einstellt.

3. Multifunktionsverarbeitungsvorrichtung nach Anspruch 2,
wobei die Übertragungseinheit (303) eine Faksimileeinheit enthält, die die Bilddaten, die durch die Leseeinheit (35) gelesen werden, als Faksimiledaten überträgt; und
die Verbindungsstatuserfassungseinheit (308, 309) konfiguriert ist, um zu erfassen, ob die Faksimileeinheit mit einem öffentlichen Leitungsnetz verbunden ist.

4. Multifunktionsverarbeitungsvorrichtung nach Anspruch 1,
wobei die Steuerverarbeitungseinstelleinheit (302) einen manuellen Einstellmodus mit manuellem Betrieb und einen automatischen Einstellmodus hat und konfiguriert ist, um die Steuerverarbeitung, die durch die Fixiersteuereinheit (306) durchgeführt wird, gemäß dem Set-up-Einstellmodus einzustellen.

5. Multifunktionsverarbeitungsvorrichtung nach Anspruch 4,
wobei die Steuerverarbeitungseinstelleinheit, wenn die Steuerverarbeitungseinstelleinheit (302) in den automatischen Einstellmodus eingestellt ist, die Steuerverarbeitung der Fixiersteuereinheit basierend auf dem Verlauf der vergangenen Verarbeitung, der in der Verarbeitungsspeichereinheit (304) gespeichert ist, einstellt.

6. Multifunktionsverarbeitungsvorrichtung nach Anspruch 4, ferner umfassend:
eine manuelle Verarbeitungsschalteinheit (270);
wobei die Steuerverarbeitungseinstelleinheit (302), wenn die Steuerverarbeitungseinstelleinheit (302) in den manuellen Einstellmodus eingestellt ist, die Steuerverarbeitung der Fixiersteuereinheit (307) basierend auf dem Betrieb der manuellen Verarbeitungsschalteinheit (270) einstellt.

7. Multifunktionsverarbeitungsvorrichtung nach Anspruch 1, ferner umfassend: eine Steuerverarbeitungsanweisungseinheit, die manuell betrieben werden kann;
wobei die Steuerverarbeitungsanweisungseinheit konfiguriert ist, um zu veranlassen, dass die Steuerverarbeitungseinstelleinheit (302) die Steuerverarbeitung der Fixiersteuereinheit (306) unabhängig des Verbindungsstatus der Steuerverarbeitung der Fixiersteuereinheit (306) in die erste Steuerverarbeitung einstellt.

## Revendications

1. Appareil de traitement multifonction, comprenant :
une unité de détection d'original (305) qui est configurée pour détecter un original réglé ;
une unité de lecture (35) qui est configurée pour lire une image sur l'original ;
une unité de formation d'image (37) qui est configurée pour former une image sur un support d'enregistrement en encre en poudre ;
une unité de fixage (307) qui est configurée pour chauffer l'image en encre en poudre formée sur le support d'enregistrement ;
une unité d'instruction de copie (321) qui est configurée pour donner une instruction d'opération de copie pour faire en sorte que l'unité de lecture (35) lise l'image de l'original réglé et pour faire en sorte que l'unité de formation d'image (37) forme l'image sur le support d'enregistrement ;
une unité de commande de fixage (306) qui est configurée pour effectuer un premier traitement de commande pour commencer d'augmenter une température de l'unité de fixage (307) sur la base de la détection de l'original par l'unité de détection d'original (305) et est configurée pour effectuer un second traitement de commande pour commencer d'augmenter la température de l'unité de fixage (307) sur la base de l'instruction d'opération de copie donnée par l'unité d'instruction de copie (321) ;
une unité de réglage de traitement de commande (302) configurée pour régler le traitement de commande effectué par l'unité de commande de fixage (306) au premier traitement de commande ou au second traitement de commande ;
une unité de transmission (303) qui est configurée pour transmettre des données lues par l'intermédiaire de l'unité de lecture (35) à un système externe ; et
une unité de stockage de traitement (304) qui est configurée pour stocker un historique d'un traitement de transmission des données lues ou d'un traitement de copie des données lues ;
dans lequel l'unité de réglage de traitement de commande (302) est configurée pour déterminer l'un, parmi le traitement de transmission et le traitement de copie, qui a été effectué plus fréquemment sur la base de l'historique du traitement passé, et est configurée pour régler le traitement de commande de l'unité de commande de fixage (306) à l'un, parmi le premier traitement de commande et le second traitement de commande, selon la détermination.

2. Appareil de traitement multifonction selon la revendication 1, comprenant en outre :
une unité de détection d'état de connexion (308, 309) qui est configurée pour détecter que l'unité de transmission (303) est ou n'est pas connectée à une unité externe ;
dans lequel, lorsque l'unité de détection d'état de connexion (308, 309) détecte que l'unité de transmission (303) n'est pas connectée à une unité externe, l'unité de réglage de traitement de commande (302) règle le traitement de commande de l'unité de commande de fixage (306) au premier traitement de commande.

3. Appareil de traitement multifonction selon la revendication 2,
dans lequel l'unité de transmission (303) inclut une unité de fac-similé qui transmet les données d'image lues par l'intermédiaire de l'unité de lecture (35) sous forme de données de fac-similé ; et
l'unité de détection d'état de connexion (308, 309) est configurée pour détecter si l'unité de fac-similé est connectée à un réseau de ligne public.

4. Appareil de traitement multifonction selon la revendication 1,
dans lequel l'unité de réglage de traitement de commande (302) possède un mode de réglage manuel de fonctionnement manuel et un mode de réglage automatique et est configurée pour régler le traitement de commande effectué par l'unité de commande de fixage (306) selon le mode de réglage d'installation.

5. Appareil de traitement multifonction selon la revendication 4,
dans lequel, lorsque l'unité de réglage de traitement de commande (302) est réglée au mode de réglage automatique, l'unité de réglage de traitement de commande règle le traitement de commande de l'unité de commande de fixage sur la base de l'historique de traitement passé stocké dans l'unité de stockage de traitement (304).

6. Appareil de traitement multifonction selon la revendication 4, comprenant en outre :
une unité de commutation de traitement manuel (270) ;
dans lequel, lorsque l'unité de réglage de traitement de commande (302) est réglée au mode de réglage manuel, l'unité de réglage de traitement de commande (302) règle le traitement de commande de l'unité de commande de fixage (307) sur la base du fonctionnement de l'unité de commutation de traitement manuel (270).

7. Appareil de traitement multifonction selon la revendication 1, comprenant en outre : une unité d'instruction de traitement de commande qui est manuellement fonctionnelle ;
dans lequel l'unité d'instruction de traitement de commande est configurée pour faire en sorte que l'unité de réglage de traitement de commande (302) règle le traitement de commande de l'unité de commande de fixage (306) au premier traitement de commande indépendamment de l'état d'installation du traitement de commande de l'unité de commande de fixage (306).
